# EUROPÄISCHE PATENTANMELDUNG

(11) **EP 2 151 378 A2**
(43) Veröffentlichungstag der Anmeldung: **10.02.2010**
(21) Anmeldenummer: 09164129.0
(22) Anmeldetag: 30.06.2009
(51) Int. Cl.: B64C 11/14

(54) **Verfahren zur Verbesserung der Strömungsverhältnisse am Propeller oder Fan eines Fugzeugtriebwerks und danach ausgebildeter Nabenkonus**

(30) Priorität: 28.07.2008 DE 102008035160
(71) Anmelder: Rolls-Royce Deutschland Ltd & Co KG, 15827 Blankenfelde-Mahlow (DE)
(72) Erfinder: Clemen, Carsten, 15749, Mittenwalde (DE)

(57) **Zusammenfassung**

Zur Verbesserung der Strömiallgsverhältnisse am Propeller (1) oder Fan (2) eines Flugzeugtriebwerks wird an dem sich an der Spitze (8a) des Nabenkonus (8) befindenden Staupunkt der Luft ein Teil des ankommenden Luftstroms über Lufteintrittsöffnungen (9) in das Innere des Nabenkonus geleitet und über Luftaustrittsöffnungen (10) im Bereich mit dem niedrigsten statischen Druck am stromab liegenden Ende des Nabenkonus an dessen Umfang mit einer im Wesentlichen der Geschwindigkeit des ankommenden Luftstroms entsprechenden Geschwindigkeit in die am Nabenkonus vorhandene dicke Grenzschicht im Wesentlichen in Strömungsrichtung eingeblasen und dabei die Grenzschicht beschleunigt und deren Geschwindigkeit auf die des ankommenden Luftstroms erhöht. Dadurch werden auch die Wurzelbereiche (4a, 6a) der Fanschaufeln bzw. Propellerflügel. (4, 6) in einem strömungstechnisch günstigen, weiniger steilen Anströmwinkel angeströmt und die Strömungsverhältnisse am Fan oder Propeller und den nachfolgenden Bauteilen und letztlich der Wirkungsgrad des Triebwerks verbessert.

## Beschreibung

Die Erfindung betrifft ein Verfahren zur Verbesserung der Strömungsverhältnisse am Propeller oder Fan eines Flugzeugtriebwerks und bezieht sich weiterhin auf die Ausbildung des Nabenkonus für den Propeller oder den Fan eines Flugzeugtriebwerks.

Der Propeller oder der Fan eines Flugzeugtriebwerks umfasst eine an eine von der Turbine angetriebene Welle angeschlossene Nabe mit mehreren an deren Umfang befestigten Propellerflügeln bzw. Fanschaufeln sowie einen stromauf mit der Nabe verbundenen und mit dieser rotierenden Nabenkonus. Der Nabenkonus sorgt unter anderem dafür, dass die ankommende Strömung möglichst günstig zum Nabenprofil des Fans bzw. Propellers und zu den Fanschaufel-oder Propellerflügelwurzeln gelangt. Entlang der Oberfläche des Nabenkonus bildet sich eine durch die Reibung beeinflusste Grenzschicht aus, deren Dicke in Strömungsrichtung allmählich zunimmt. Die sich in einer Dicke von einigen Millimetern ausbildende Grenzschicht hat - in Abhängigkeit von ihrer Dicke - zur Folge, dass das Fan- bzw. Propellernabenprofil sehr langsam und unter einem steilen Anströmwinkel angeströmt wird. Eine damit verbundene Strömungsablösung an den an die Nabe bzw. das Nabenprofil anschließenden Fanschaufel- bzw. Propellerflügelbereichen führt zu Strömungsverlusten und einer ungünstigen Abströmung des Propellers oder Fans, die den Wirkungsgrad reduzieren und die Strömungsverhältnisse in den nachfolgenden Triebwerkskomponenten negativ beeinflussen können.

Der Erfindung liegt die Aufgabe zugrunde, ein Verfahren zur Verbesserung der Strömungsverhältnisse am Propeller oder Fan eines Flugzeugtriebwerks anzugeben und einen zur Realisierung des Verfahrens vorgesehenen Nabenkonus so auszubilden, dass die Strömungsablösung an den Fanschaufeln bzw. Propellerflügeln minimiert und der daraus resultierende negative Einfluss auf die Strömungsverhältnisse und den Wirkungsgrad des Triebwerks verringert wird.

Erfindungsgemäß wird die Aufgabe mit einem Verfahren gemäß den Merkmalen des Patentanspruchs 1 sowie einem gemäß den Merkmalen des Patentanspruchs 2 ausgebildeten Nabenkonus gelöst. Zweckmäßige Ausgestaltungen der Erfindung sind Gegenstand der Unteransprüche.

Der Grundgedanke der Erfindung besteht darin, dass an dem sich an der Spitze des dem Propeller oder Fan zugeordneten Nabenkonus ausbildenden Staupunkt der Luft ein Teil des ankommenden Luftstroms in den Nabenkonus geleitet und dieser Luftstrom mit einer der ankommenden Luftströmung entsprechenden Geschwindigkeit in einem Bereich mit dem geringsten statischen Druck, das heißt kurz vor dem Propeller oder Fan, in Strömungsrichtung in die am Umfang des Nabenkonus vorhandene dicke Grenzschicht eingeblasen wird. Dadurch wird die Grenzschicht kurz vor dem Propeller oder Fan beschleunigt und nimmt die Geschwindigkeit der ankommenden Luftströmung an, so dass die Luft auch auf den nahe der Nabe liegenden Wurzelbereich der Fanschaufeln bzw. Propellerflügel in einem weniger steilen Anströmwinkel trifft und mithin am Fan oder Propeller sowie an den nachfolgenden Triebwerkskomponenten günstige und sich vorteilhaft auf den Wirkungsgrad auswirkende Strömungsverhältnisse vorliegen.

Ein auf der Basis des erfindungsgemäßen Verfahrens ausgebildeter Nabenkonus weist im Bereich seiner einen Staupunkt für die ankommende Luftströmung bildenden Spitze mindestens eine Lufteintrittsöffnung auf, die über innerhalb des Nabenkonus verlaufende Verbindungsleitungen mit einer Vielzahl von Luftaustrittsöffnungen verbunden ist, die kurz vor dem Fan oder Propeller an Luftaustrittsöffzungen münden, die am Umfang des Nabenkonus verteilt ausgebildet sind.

An der Nabenspitze kann eine zentrisch angeordnete oder eine als Ringschlitz ausgebildete Lufteintrittsöffnung vorgesehen sein. Gleichermaßen können auch mehrere Lufteintrittsöffnungen ringförmig angeordnet sein. Die Verbindungsleitungen zwischen den Lufteintritts- und -austrittsöffnungen können Rohrleitungen oder in den Nabenkonus integrierte Kanäle sein.

Die Luftaustrittsöffnungen sind so ausgebildet, dass die über die Verbindungsleitungen zugeführte Luft in Strömungsrichtung und möglichst parallel zur Außenfläche des Nabenkonus in die Grenzschicht geblasen wird, und zwar mit einer Geschwindigkeit, die etwa der Geschwindigkeit der ankommenden Luftströmung entspricht. Zu diesem Zweck sind die Luftaustrittsöffnungen vorzugsweise als Düsenkörper ausgeführt.

Gemäß einem weiteren Merkmal der Erfindung kann den Luftaustrittsdüsen jeweils eine oder auch eine gemeinsame Luftberuhigungskammer vorgeschaltet sein, um am Umfang des Nabenkonus eine gleichmäßige Luftzufuhr in die Grenzschicht und deren gleichmäßige Beschleunigung zu bewirken.

Ein Ausführungsbeispiel der Erfindung wird anhand der Zeichnung, in der in stark vereinfachter, schematischer Darstellung
- Fig. 1: oberhalb der Mittellinie einen Propeller und unterhalb der Mittellinie einen Fan mit diesen zugeordnetem Nabenkonus; und
- Fig. 2 eine: vergrößerte Schnittansicht eines Nabenkonus mit zwei unterschiedlichen varianten der Lufteinführung in eine Grenzschicht
zeigt, näher erläutert.

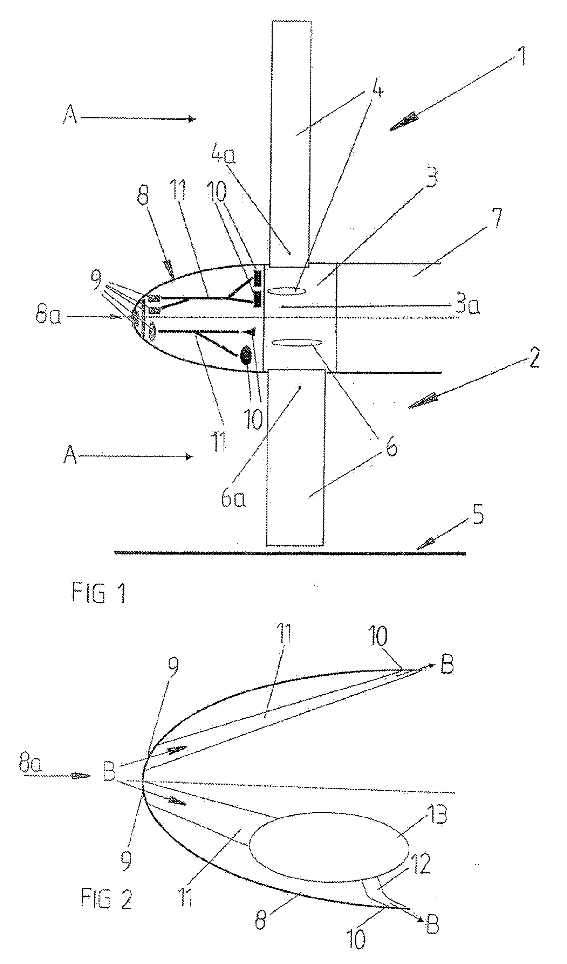

Fig. 1 zeigt - der Einfachheit halber gleichzeitig in derselben Ansicht - einen Propeller 1 und einen Fan 2 für ein Flugzeugtriebwerk, die jeweils mit einer Nabe 3 verbundene Propellerflügel 4 bzw. innerhalb eines Gehäuses 5 umlaufende Fanschaufeln 6 umfassen. Die Nabe 3 ist stromab mit einer von einer Turbine (nicht dargestellt) angetriebenen Welle 7 und stromauf mit einem Nabenkonus 8 verbunden. Der Nabenkonus 8 hat unter anderem die Aufgabe, den in Höhe der Nabe 3 auf den Propeller 1 bzw. den Fan 2 auftreffenden Luftstrom A möglichst ungestört zum Nabenprofil 3a und zu den nahe am Nabenprofil 3a liegenden Wurzelbereichen 4a bzw. 6a der Propellerflügel 4 bzw. der Fanschaufeln 6 zu führen.

Im Bereich der Spitze 8a des Nabenkonus 8, das heißt am Staupunkt der zuströmenden Luft, sind Lufteintrittsöffnungen 9 ausgebildet, die unmittelbar zentrisch oder ringförmig an der Spitze 8a angeordnet sein können oder auch als Ringschlitz ausgebildet sein können. An dem von der Spitze 8a entfernten Ende des Nabenkonus 8, das heißt nahe dem Propeller 1 bzw. dem Fan 2 und dort, wo der statische Druck des ankommenden Luftstroms A am geringsten ist, sind am Umfang verteilt angeordnete Luftaustrittsöffnungen 10 vorgesehen, die über Verbindungsleitungen 11 mit den Lufteintrittsöffnungen 9 verbunden sind. Die Luftaustrittsöffnungen 10 sind, wie Fig. 2 zeigt, als im Wesentlichen in Strömungsrichtung bzw. weitestgehend parallel zur Oberfläche des Nabenkonus 8 ausgerichtete Düsenkörper 12 ausgebildet, denen, wie ebenfalls aus Fig. 2 ersichtlich, eine Luftberuhigungskammer 13 vorgeschaltet sein kann.

Aufgrund des statischen Druckgefälles zwischen dem Staupunkt 8a (Spitze 8a des Nabenkonus), an dem sich die Lufteintrittsöffnungen 9 befinden, und dem kurz vor der Nabe 3 des Propellers bzw. Fans liegenden Bereich des Nabenkonus 8, in dem sich die Luftaustrittsöffnungen 10 bzw. die Düsenkörper 12 befinden, strömt die am Staupunkt aus dem ankommenden Luftstrom A entnommene Luft über die Verbindungsleitungen 11 mit entsprechender Geschwindigkeit selbsttätig zu den Luftaustrittsöffnungen 10, das heißt zu der Einblaseposition in die am Umfang des Nabenkonus 8 gebildete dicke Grenzschicht. Die vorzugsweise als Düsenkörper 12 gestalteten Luftaustrittsöffnungen 10 sind so dimensioniert, dass die Geschwindigkeit der dort ausströmenden und in die Grenzschicht eingeblasenen Luft B einen Wert hat, der der Geschwindigkeit der den Propeller bzw. Fan anströmenden Luft entspricht und durch den die Grenzschicht auf die Geschwindigkeit der ankommenden Luftströmung A beschleunigt wird.

Aufgrund der nahe am Propeller 1 bzw. Fan 2 energetisierten, beschleunigten und verdünnten Grenzschicht trifft die ankommende Luft auch in den nabennahen Bereichen (Wurzelbereiche 4a, 6a) in einem strömungstechnisch günstigen Anströmwinkel auf die Propellerflügel 4 bzw. Fanschaufeln 6, so dass die Strömungsverluste am Propeller 1 bzw. am Fan 2 reduziert und die Strömungsverhältnisse an den nachfolgenden Triebwerkskomponenten verbessert werden und letztlich der Wirkungsgrad des Triebwerks erhöht wird.

### Bezugszeichenliste

- 1: Propeller
- 2: Fan
- 3: Nabe
- 3a: Nabenprofil v. 3
- 4: Propellerflügel
- 4a Wurzelbereich: v. 4
- 5: Gehäuse v. 2
- 6: Fanschaufel
- 6a: Wurzelbereich v. 6
- 7: Welle
- 8: Nabenkonus
- 8a: Spitze v. 8, Staupunkt
- 9: Lufteintrittsöffnungen
- 10: Luftaustrittsöffnungen
- 11: Verbindungsleitungen
- 12: Düsenkörper
- 13: Luftberuhigungskammer
- A: ankommende Luftströmung
- B: in Grenzschicht eingeblasene Luft

## Patentansprüche

1. Verfahren zur Verbesserung der Strömungsverhältnisse an dem mit einem Nabenkonus versehenen, mit einem ankommenden Luftstrom (A) beaufschlagten Propeller oder Fan eines Flugzeugtriebwerks, **dadurch gekennzeichnet, dass** in dem sich an der stromauf liegenden Spitze des Nabenkonus befindenden Staupunkt der Luft ein Teil (B) des ankommenden Luftstroms in das Innere des Nabenkonus geleitet und in einem Bereich mit dem niedrigsten statischen Druck am stromab liegenden Ende des Nabenkonus an dessen Umfang mit einer im Wesentlichen der Geschwindigkeit des ankommenden Luftstroms entsprechenden Geschwindigkeit in die am Nabenkonus vorhandene dicke Grenzschicht in Strömungsrichtung eingeblasen und dabei die Geschwindigkeit der Grenzschicht auf die des ankommenden Luftstroms erhöht und deren Dicke verringert wird.

2. Nabenkonus für den Propeller oder den Fan eines Flugzeugtriebwerks zur Durchführung des Verfahrens nach Anspruch 1, **gekennzeichnet durch** mindestens eine im Bereich der einen Staupunkt für die ankommende Luftströmung bildenden Spitze (8a) des Nabenkonus (8) vorgesehene Lufteintrittsöffnung (9), die über im Innern des Nabenkonus (8) verlaufende Verbindungsleitungen (11) mit am von der Nabenspitze entfernten Ende des Nabenkonus (8) ringförmig angeordneten Luftaustrittsöffnungen (10) verbunden ist.

3. Nabenkonus nach Anspruch 2, **dadurch gekennzeichnet, dass** die Lufteintrittsöffnung (9) zentrisch am Staupunkt angeordnet ist.

4. Nabenkonus nach Anspruch 2, **dadurch gekennzeichnet, dass** die Lufteintrittsöffnung (9) als Ringschlitz ausgeführt ist.

5. Nabenkonus nach Anspruch 2, **dadurch gekennzeichnet, dass** mehrere Lufteintrittsöffnungen (9) ringförmig angeordnet sind.

6. Nabenkonus nach Anspruch 2, **dadurch gekennzeichnet, dass** die Verbindungsleitungen (11) im Innern des Nabenkonus (8) verlaufende Rohre oder in den Nabenkonus (8) integrierte Kanäle sind.

7. Nabenkonus nach Anspruch 2, **dadurch gekennzeichnet, dass** die Luftaustrittsöffnungen (10) so angeordnet sind, dass die abgezweigte Luft (B) im Wesentlichen parallel zur Wand des Nabenkonus (8) in die an dessen Außenfläche vorhandene Grenzschicht austritt.

8. Nabenkonus nach Anspruch 2, **dadurch gekennzeichnet, dass** die Luftaustrittsöffnungen (10) als Düsenkörper (12) ausgebildet sind.

9. Nabenkonus nach Anspruch 2, **dadurch gekennzeichnet, dass** die Verbindungsleitungen (11) in eine diesen einzeln oder gemeinsam zugeordnete, im Nasenkonus (8) ausgebildete Luftberuhigungskammer (13) münden, die mit den Luftaustrittsdüsen (10) oder Düsenkörpern (12) verbunden ist.
